# NEUE EUROPÄISCHE PATENTSCHRIFT

(11) **EP 0 540 889 B2**
(45) Veröffentlichungstag und Bekanntmachung des Hinweises auf die Entscheidung über den Einspruch: **09.06.2004**
(45) Hinweis auf die Patenterteilung: 08.07.1998
(21) Anmeldenummer: 92117107.0
(22) Anmeldetag: 07.10.1992
(51) Int. Cl.: A01C 17/00

(54) **Schleuderdüngerstreuer**
Fertilizer broadcaster
Epandeur d'engrais centrifuge

(30) Priorität: 17.10.1991 DE 4134315; 17.10.1991 DE 4134317; 29.05.1992 DE 4217894
(43) Veröffentlichungstag der Anmeldung: 12.05.1993
(73) Patentinhaber: Amazonen-Werke H. Dreyer GmbH & Co. KG, 49205 Hasbergen (DE)
(72) Erfinder: Dreyer, Heinz, Dipl.-Ing. Dr., W-4507 Hasbergen (DE)
(74) Vertreter: Grünecker, Kinkeldey, Stockmair & Schwanhäusser Anwaltssozietät

(56) Entgegenhaltungen:
- EP-A- 0 222 337
- EP-A- 0 329 072
- EP-A- 0 392 288
- EP-A- 0 410 112
- EP-A- 0 504 720
- DE-A- 1 582 091
- DE-A- 1 910 372
- DE-A- 3 803 408
- DE-A- 4 101 681

## Beschreibung

Die Erfindung betrifft einen Schleuderdüngerstreuer gemäß des Oberbegriffes des Anspruches 1.

Ein derartiger Schleuderdüngerstreuer ist durch die EP-A-03 92 288 (Fig. 11) bekannt. Bei diesem Schleuderdüngerstreuer sind die Dosierorgane zur Verlagerung der Aufgabefläche um aufrechte Achsen verdrehbar. Die Drehachse liegt in einem größeren Abstand zur Drehachse der Schleuderscheiben.

Ein weiterer Schleuderdüngerstreuer ist beispielsweise durch die deutsche Offenlegungsschrift 38 03 408 bekannt. Bei diesem Schleuderdüngerstreuer ist die Arbeitsbreite während der Fahrt veränderbar, indem die Aufgabefläche des Düngers auf der Schleuderscheibe mittels einer trichterartigen Rutsche verlagert werden kann. Diese Verlagerung der Aufgabenfläche geschieht gleichzeitig mit einer Drehzahländerung der Schleuderscheiben.

Der Erfindung liegt die Aufgabe zugrunde, auf einfache Weise eine Veränderung der Arbeitsbreite, auch eine einseitige Arbeitsbreitenreduzierung, beispielsweise zum Ausstreuen von keilfömigen Flächen zu erreichen.

Diese Aufgabe wird durch die kennzeichnenden Merkmale des Anspruches 1 gelöst.

Infolge dieser Maßnahmen wird durch eine Verlagerung der Aufgabefläche des Düngers auf der Schleuderscheibe eine Veränderung der Arbeitsbreite in einfacher Weise erzielt, die darüberhinaus in einfacher Weise eine Veränderung, d.h. eine Vergrößerung oder Reduzierung der Arbeitsbreite, auch einseitig, beispielsweise für das Ausstreuen von Keilflächen ermöglicht. Auch kann durch eine Verlagerung der Aufgabefläche des Düngers auf der Schleuderscheibe auf sehr einfache Weise das Grenzstreuen durchgeführt werden.

Die Aufgabefläche des Düngers auf der Schleuderscheibe ist derart verstellbar, daß die Streubreite und/oder Arbeitsbreite veränderbar ist. Hierbei soll diese Aufgabefläche derart verstellt werden, daß bei einer Veränderung (Vergrößerung oder Verkleinerung) der Arbeitsbreite die Streuqualität und gleichmäßige Düngerverteilung erhalten bleibt.

Weiterhin ist vorgesehen, daß die Dosierorgane als über Schieber in ihrer Öffnungsbreite einstellbare Auslauföffnungen ausgebildet sind, daß die Auslauföffnungen in platten- oder topfähnlichen Elementen angeordnet sind, und daß die Dosierorgane gegenüber dem Vorratsbehälter verstell-, verschieb- oder verdrehbar angeordnet sind. Durch die Verschiebung, Verstellung oder Verdrehung der Auslauföffnungen gegenüber der jeweiligen Schleuderscheiben wird der Aufgabepunkt des sich im Vorratsbehälters befindlichen Materials auf der Schleuderscheibe verändert, wodurch sich eine Arbeitsbreitenveränderung in gewünschter Weise nach entsprechender Vorgabe ergibt.

Weiterhin ist vorgesehen, daß die Dosierorgane mittels eines verstellbaren Verstellelementes in ihrer Lage verstellbar sind. Hierdurch ist es in einfacher Weise möglich, die Dosierorgane in ihrer Lage exakt einzustellen. Hierbei können die Dosierorgane auch mittels eines fernbedienbaren Elementes verstellbar sein.

Damit eine einseitige oder unsymetrische Veränderung der Arbeitsbreite und des Streubildes möglich ist, ist vorgesehen, daß die Dosierorgane unabhängig voneinander verstellbar sind. Somit kann die Position der Aufgabefläche unabhängig voneinander je Schleuderscheibe verändert werden.

Damit die ausgebrachte Düngermenge pro Flächeneinheit bei sich verändernder Arbeitsbreite, beispielsweise durch Veränderung der Position der Aufgabefläche auf die Schleuderscheibe, konstant gehalten werden kann ist vorgesehen, daß die Lageverstellung des Dosierorganes mit der Mengenverstellung des Dosierorganes verknüpft ist.

In einer weiteren Ausführungsform ist zusätzlich vorgesehen, daß die Drehzahl der Schleuderscheiben über eine Drehzahlregulierungseinrichtung veränderbar ist. Auch über die Veränderung der Drehzahl kann die Arbeitsbreite verändert werden. Selbstverständlich muß auch hier die Drehzahlregulierungseinrichtung mit der Mengeneinstellungseinrichtung verknüpft sein, um die Ausbringmenge pro Flächeneinheit konstant zu halten, wenn die Arbeitsbreite sich verändert.

Weiterhin ist es durch die Verlagerung der Aufgabefläche im erfindungsgemäßen Sinne möglich, unterschiedlichste Streusektoren und Streuprinzipien bei ein und demselben Düngerstreuer anwenden zu können. Somit ist es möglich, bei Schleuderstreuern, deren Schleuderscheiben im entgegengesetzten Drehsinn zueinander angetrieben werden, so anzutreiben, daß die Schleuderscheiben wahlweise derart antreibbar sind, daß sie in der einen Antriebsart derart angetrieben werden, daß sie in mittleren hinteren Bereich auseinanderdrehen, während sie in der anderen Antriebsart im mittleren hinteren Bereich aufeinanderzudrehen. Erst durch die erfindungsgemäße Verlagerung der Aufgabefläche auf der Schleuderscheibe sind diese beiden Betriebsarten wahlweise bei ein und demselben Schleuderdüngerstreuer möglich.

Weiterhin ist vorgesehen, daß jede Arbeitsbreite entsprechende Positionen der Dosierorgane und/oder der Schleuderscheibe und/oder die Mengeneinstellung in eine Streutabelle eingetragen oder in ein elektronisches Regel- oder Einstellgerät eingespeichert sind.

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Ansicht von hinten in Prinzipdarstellung,
- Fig. 2: den Schleuderdüngerstreuer in der Ansicht X - X in Prinzipdarstellung,
- Fig. 3: den Schleuderdüngerstreuer gemäß Fig. 1, wobei jedoch die Schleuderscheiben seitlich nach außen verschoben sind in Prinzipdarstellung,
- Fig. 4: die Darstellung eines mit dem Schleuderstreuer erzielbaren Streuprinzipes und,
- Fig. 5: die Darstellung eines anderen mit dem Schleuderstreuer erzielbaren Streuprinzipes.

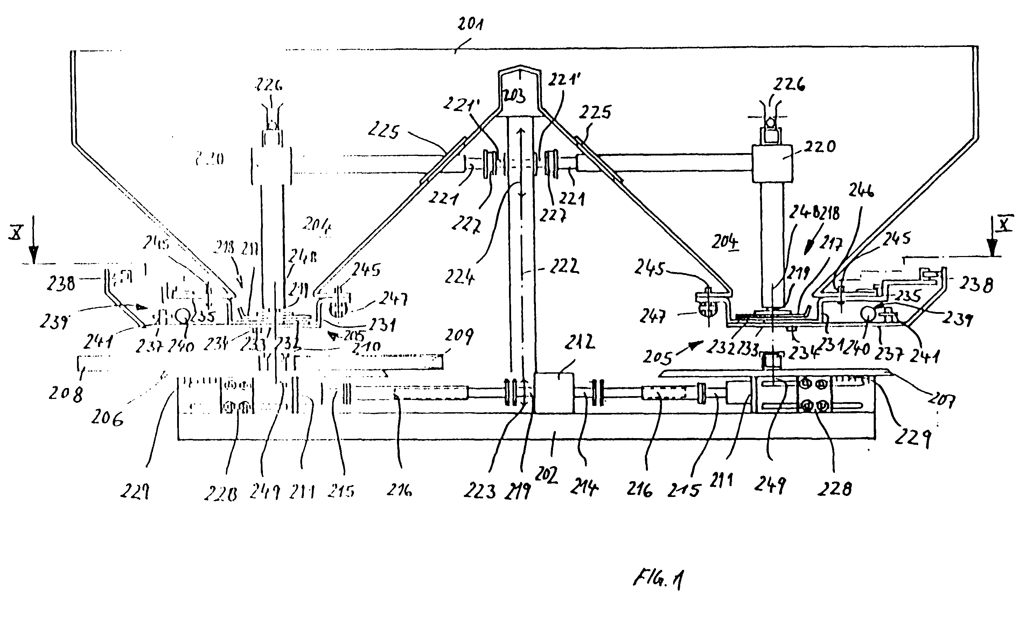

Der Zentrifugaldüngerstreuer gemäß Fig. 1 weist den Vorratsbehälter 201 und den Rahmen 202 auf. Der Vorratsbehälter 201 ist durch ein dachförmiges Mittelteil 203 in die beiden unteren Trichter 204 aufgeteilt. Am unteren Ende jedes Trichters 204 ist ein Dosierorgan 205 angeordnet. Unterhalb der Dosierorgane 205 sind die Schleuderscheiben 206 und 207 am Rahmen 202 angeordnet. Die Schleuderscheiben 206 und 207 tragen die beiden in Scheibenebene winkelverstellbaren Wurfschaufeln 208 und 209. Die Schleuderscheiben 206 und 207 sind auf den in einem Abstand unterhalb der Dosierorgane 205 endenden Ausgangswellen 210 des Getriebes 211 austauschbar angeordnet. Am Rahmen 202 befindet sich das Mittelgetriebe 212 mit der Eingangswelle 213 und den beiden seitlichen Ausgangswellen 214. Zwischen den Ausgangswellen 214 des Mittelgetriebes 212 und den Eingangswellen 215 der Getriebe 211 für die Schleuderscheiben 206 und 207 sind die teleskopierbaren Verbindungswellen 216 angeordnet. Die Eingangswelle 213 des Mittelgetriebes 212 wird über die Gelenkwelle an die Zapfwelle des Schleppers angetrieben. Somit werden die Schleuderscheiben 206 und 207 rotierend angetrieben.

In jedem Trichter 204 ist jeweils ein Rührorgan 217 eines Rührwerkes 218 angeordnet. Jedes Rührorgan 217 wird von einer Welle 219 über jeweils ein Winkelgetriebe 220 und die horizontale Welle 221 angetrieben. Der Antrieb erfolgt über einen Kettentrieb 221 durch das Mittelgetriebe 212. Hierzu ist auf die eine Ausgangswelle 215 des Mittelgetriebes 212 ein Zahnrad 223 aufgesetzt. Dieses Zahnrad 223 weist wesentlich weniger Zähne als das auf der Rührwellenantriebswelle 221 aufgesetzte Zahnrad 224 auf. Somit wird also das Rührorgan mit einer wesentlich kleineren Geschwindigkeit als die Eingangsdrehzahl des Mittelgetriebes 212 angetrieben. Die Drehzahl kann auch durch die Kegelzahnradkombination in dem Winkelgetriebe 220 noch entsprechend bestimmt werden. Das Rührwerk 218 ist in den Trichtern 204 herausnehmbar angeordnet. Hierzu muß der seitliche Flansch 225 sowie die mittige Aufhängung 226 gelöst werden, so daß das Getriebe 220 mit Antriebswellen 219 und 221 und dem Rührorgan 218 aus den Trichtern 204 herausgenommen werden kann. Zu diesem Zweck sind die Wellen 221 über Kupplungen 227 lösbar mit dem Mittelwellensück 221 verbunden.

Die Getriebegehäuse 211 für die Schleuderscheiben 206 und 207 sind mittels einer Schiebeführung 228 an des Rahmen 202 verschiebbar angeordnet, so daß unterschiedliche Positionen anhand der Skala 229 für die Schleuderscheiben 206 und 207 bzgl. der Dosierorgane 205 eingestellt werden können. Die Schleuderscheiben 206 und 207 sind quer zur Fahrtrichtung 230 verschiebbar am Rahmen 202 befestigt.

Jedes Dosierorgan 205 besteht aus der Bodenplatte 231 mit der Auslauföffnung 232 und dem Schieber 233. Die Bodenplatte 231 ist als topfähnliches Element ausgebildet. In der Bodenplatte 231 befindet sich die Auslauföffnung 232. Weiterhin weist das Dosierorgan 205 den unterhalb des topfförmigen Elementes 231 angeordneten Schieber 233 auf. Der Schieber 233 ist mittels des Bolzens 234 an dem topfförmigen Element 231 gelenkig angeordnet. An dem topfförmigen Element 231 befindet sich das Einstellsegment 235, welches auf seiner Außenseite jeweils eine Skala 236 trägt. An dem Schieber 233 befindet sich der Einstellhebel 237, welcher an seinem Ende einen Zeiger 238 trägt, der mit der Skala 236 zusammenwirkt. Zwischen dem Einstellhebel 237 des Schiebers 233 und dem Einstellelement 235, welches an dem topfförmigen Element 231 angeordnet ist, befindet sich die Einstellvorrichtung 239 für den Schieber 233. Diese Einstellvorrichtung 239 ist als einseitig wirkender Hydraulikzylinder 240 und einer mit ihm zusammenwirkenden Zugfeder 241 ausgebildet. Über Hyraulikschläuche 242 werden die Hydraulikzylinder 240 von der Schlepperhydraulikanlage betätigt.

An dem unteren Ende jedes Trichters befindet sich ein Kreissegment 243, welches mit den kreisförmigen Langlöchern 244 versehen ist. In diese kreisförmigen Langlöcher 244 fassen die an dem topfförmigen Element 231 angebrachte Bolzen 245. Auf der Oberseite des Bolzens 245 befindet sich ein Sicherungselement 246. Somit ist also das topfförmige Element 231 an dem Vorratsbehälter 201 angeschlossen. Zwischen dem topfförmigen Element 231 und dem Rahmen 102 befindet sich jeweils ein Einstellelement 247, welches als elektrischer Stellzylinder ausgebildet ist. Über diesen elektrischen Stellzylinder 247 kann das topfförmige Element 231 des Dosierorganes 205 um die Achse 248 verdreht werden. Durch die Verdrehung des Dosierorganes 205 wird die Auslauföffnung 232 verlagert, so daß hierdurch die Aufgabefläche, auf die der Dünger durch die Auslauföffnung 232 auf die Schleuderscheibe aufgegeben wird, auf der Schleuderscheibe in oder entgegen der Drehrichtung verlagert wird. Gemäß den in Fig. 1 dargestellten Einstellungen der Schleuderscheiben 206 und 207 fallen die Drehachse 249 der Schleuderscheibe 206 und 207 mit der Drehachse des Rührorganes 219 und der Drehachse 248, um welche das topfförmige Element 231, in dem sich die Auslauföffnung 232 befindet, verdreht wird, zusammen. Gemäß Fig. 11 ist die in Fahrtrichtung 230 gesehene rechte Schleuderscheibe 207 nach außen verschoben, so daß die Drehachse 248 der Schleuderscheibe 207 nicht mit der Drehachse 248 des Rührorganes 218 und der Drehachse, um welche das Dosierorgan 205 verdreht wird, zusammenfallt. Die Schleuderscheiben 206 und 207 sind also quer zur Fahrtrichtung 230 des Schleuderdüngerstreuers verschiebbar angeordnet. Es ist möglich, die Verschiebung der Schleuderscheiben 206 und 207 so vorzusehen, daß zwischen dem Getriebegehäuse 211 der Schleuderscheiben 206 und 207 und dem Rahmen 202 Verstellelemente, beispielsweise elektrische Stellmotoren angeordnet sind, so daß während der Fahrt eine Verstellung der Schleuderscheiben quer zur Fahrtrichtung erfolgen kann. Hierbei kann die Verstellung auch so gewählt werden, daß die Schleuderscheiben 206 und 207 gemeinsam oder unabhängig voneinander verstellbar sind.

Durch die Verstellung der Auslauföffnungen 232 gegenüber der jeweiligen Schleuderscheibe 206 und 207 wird eine Verlagerung des Streusektors und damit eine einhergehende Arbeitsbreitenveränderung erreicht. Damit die Ausbringmengen pro Flächeneinheit konstant bleibt, muß auch entsprechend das Dosierorgan 205 nachgestellt werden. Je nach Verstellung der Auslauföffnung 232 gegenüber der Schleuderscheibe muß die Auslauföffnung 232 durch Verstellung des Schiebers 233 vergrößert oder verkleinert werden, um die Ausbringmenge pro Flächeneinheit konstant zu halten. Das Gleiche gilt bei einer Verstellung der Schleuderscheibe 206, 207 gegenüber dem Dosierorgan 205. Auch hierdurch erfolgt eine Arbeitsbreitenveränderung. Es muß also, um die Arbeitsbreite bei einer Verstellung der Schleuderscheibe 206, 207 konstant zu halten, auch ebenfalls wieder eine Mengenverstellung vorgenommen werden. Diese Verstellungen können über eine elekronische Regeleinrichtung, welche nicht dargestellt ist, vorgenommen werden. In dieser Steuerund Regeleinrichtung sind die entsprechenden Aufgabeflächenpositionen sowie Mengeneinstellungen eingespeichert. Weiterhin sind in dieser Steuer- und Regeleinrichtung die Verstellung der Dosierorgane zur Aufgabeflächenverlagerung, die Verstellung der Schleuderscheiben und/oder die Mengeneinstellung miteinander verknüpft. Somit können die Arbeitsbreiten verkleinert oder vergrößert werden, wobei die Ausbringmenge pro Flächeneinheit konstant bleibt.

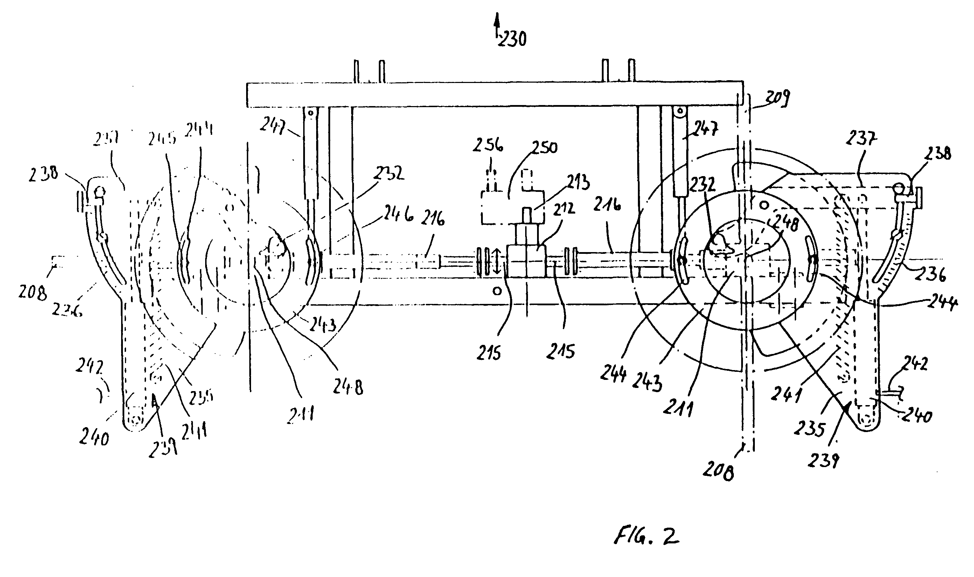

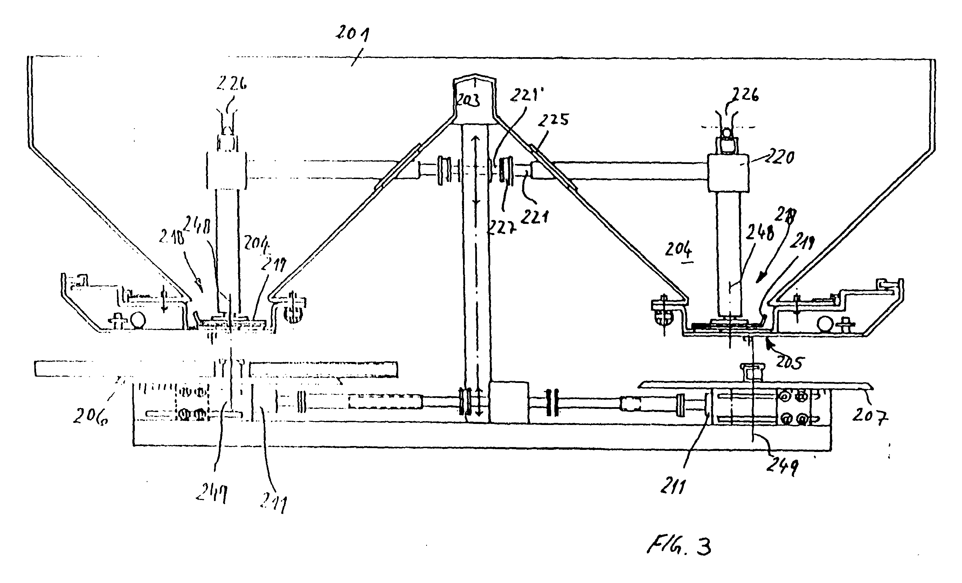

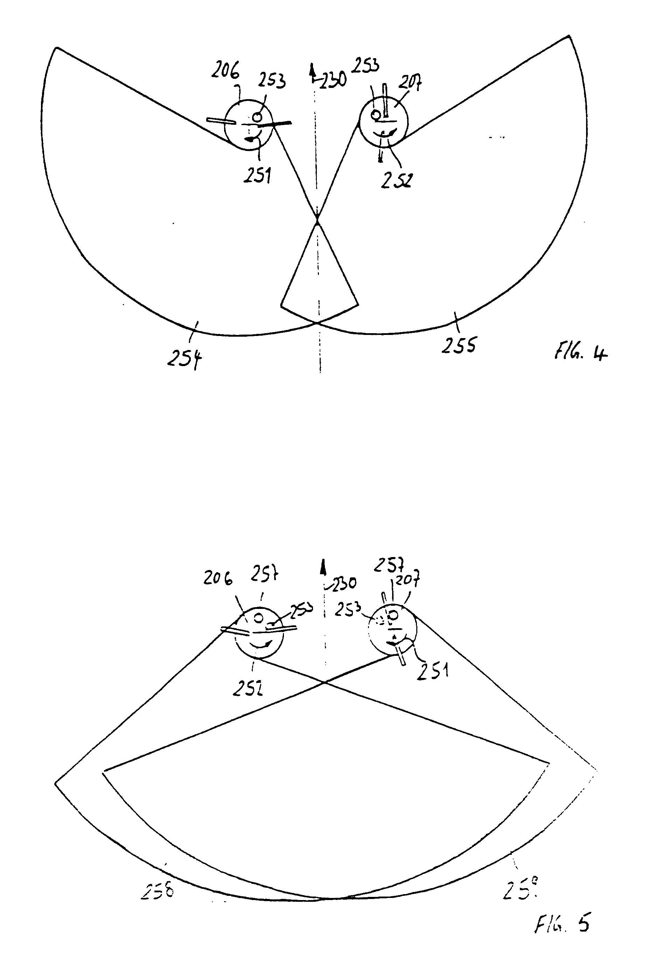

In Fig. 2 ist vor dem Mittelgetriebe ein Vorsatzgetriebe 250 angeordnet, mit welchem die Drehrichtung der Schleuderscheiben 206, 207 umkehrbar ist. Je nach Drehrichtung der Schleuderscheiben 206, 207 lassen sich verschiedene Streubilder erzielen. Zusätzlich muß hierzu eine Aufgabeflächenverlagerung bzgl. der Schleuderscheibe 206, 207 erfolgen. Die dadurch erzielten Streubilder sind in den Fig. 4 und 5 darstellt, was weiter unten noch näher erläutert wird.

Die Fig. 4 zeigt das mit dem Schleuderstreuer gemäß den Fig. 1 und 2 erzielte Streuprinzip. Die Schleuderscheiben 206 und 207 werden im entgegengesetzen Drehsinn derart angetrieben, daß sie bezogen auf die Fahrtrichtung 230 im hinteren mitteleren Bereich auseinanderdrehen. Die Schleuderscheibe 206 wird in Drehrichtung 251 und die Schleuderscheibe 207 in Drehrichtung 252 angetrieben. Der Dünger wird über die Dosierorgane 205 auf die Aufgabeflächen 253 auf die Schleuderscheibe 206 und 207 aufgegeben. Der Dünger wird von der Schleuderscheibe 206 über den Streusektor 254 und von der Schleuderscheibe 207 über den Streusektor 255 abgeschleudert. Im mittleren Bereich überlappen sich die beiden Streusektoren, so daß sich eine gleichmäßige Düngerverteilung auf dem Boden ergibt.

Desweiteren läßt sich mit dem Schleuderstreuer auch das in Fig. 5 dargestellte Streuprinzip erzielen. Hierzu ist es erforderlich, daß die Schleuderscheiben in umgekehrter Drehrichtung angetrieben werden. Hierzu wird auf die Eingangswelle 213 des Mittelgetriebes 212, wie in Fig. 2 mit strichpunktieren Linien dargestellt, daß Umkehrgetriebe 250 aufgesteckt. Die Gelenkwelle wird dann anstelle auf die Welle 213 auf die Eingangswelle 256 des Umkehrgetriebes 250 aufgesetzt, so daß dann die Schleuderscheibe 206 in Drehrichtung 252 und die Schleuderscheibe 207 in Drehrichtung 251, wie in Fig. 5 dargestellt, angetrieben. U.U. ist es erforderlich, auch die Schleuderscheiben oder die Wurfschaufeln gegen anders ausgebildete auszutauschen. Die Schleuderscheiben 206 und 207 werden wiederum in entgegengesetztem Drehsinn angetrieben und jetzt derart, daß sie bezogen auf die Fahrtrichtung 230 im mitteleren hinteren Bereich aufeinander zu drehen. Weiterhin muß die Aufgabefläche aus den mit strichpunktieren Linien dargestellten Positionen 253 in die Positionen 257 verlagert werden, um das in Fig. 5 dargestellte Streuprinzip zu erzielen. Die Schleuderscheibe 206 schleudert den Dünger über den Streusektor 258 ab, während die Schleuderscheibe 207 den Dünger über den Streusektor 259 verteilt. Die beiden Streusektoren 258 und 259 überlappen sich fast vollständig. Auch hierdurch ergibt sich ein gleichmäßiges Streubild, wobei eine doppelte Düngerüberlappung erfolgt.

## Patentansprüche

1. Schleuderdüngerstreuer mit Vorratsbehälter (201) und zumindest zwei rotierend angetriebenen Schleuderscheiben (206,207), denen über Dosierorgane (205) das sich im Vorratsbehälter (201) befindliche Material in einstellbaren Mengen zuführbar ist, wobei die Zuordnung von Dosierorganen (205) zur Schleuderscheibe (206,207) zur Verlagerung der Aufgabefläche des Materiales auf die Schleuderscheibe (206,207) zumindest zwischen zwei Positionen mittels Fernbedienungseinrichtungen veränderbar ist, wobei die Bodenplatte (231) des Vorratsbehälters (201) Bestandteil der Dosierorgane ist und die Verlagerung der Aufgabefläche zwischen den Positionen mittels dieser Fernbedienungsvorrichtungen derart erfolgt, daß die Streubreite und/oder Arbeitsbreite veränderbar ist, **dadurch gekennzeichnet, daß** die Dosierorgane, d.h. auch die Bodenplatte (231), zur Verlagerung der Aufgabefläche um aufrechte Achsen, verdrehbar sind.

2. Schleuderdüngerstreuer nach Anspruch 1, **dadurch gekennzeichnet, daß** die Dosierorgane (205) gegenüber der Schleuderscheibe (206,207) in einer zur Scheibenebene parallelen Ebene verstelloder verschiebar sind.

3. Schleuderdüngerstreuer nach Anspruch 1, **dadurch gekennzeichnet, daß** die Dosierorgane (205) als über Schieber (233) in ihrer Öffnungsweite einstellbare Auslauföffnungen (232) ausgebildet sind, daß die Auslauföffnungen in Platten oder topfähnlichen Elementen (231) angeordnet sind, daß die Dosierorgane (205) gegenüber dem Vorratsbehälter verstell-, verschieb- oder verdrehbar angeordnet sind.

4. Schleuderdüngerstreuer nach einem oder mehreren der vorstehenden Ansprüche, **dadurch gekennzeichnet, daß** die Dosierorgane (205) unabhängig voneinander verstellbar sind.

5. Schleuderdüngerstreuer nach einem oder mehreren der vorstehenden Ansprüche, **dadurch gekennzeichnet, daß** die Lageverstellung des Dosierorganes (205) mit der Mengenverstellung des Dosierorganes (205) verknüpft ist.

6. Schleuderdüngerstreuer nach einem oder mehreren der vorstehenden Ansprüche, **dadurch gekennzeichnet, daß** die Drehzahl der Schleuderscheiben (206,207) über eine Drehzahlregulierungseinrichtung veränderbar ist.

7. Schleuderdüngerstreuer nach einem oder mehreren der vorstehenden Ansprüche, **dadurch gekennzeichnet, daß** die Drehzahlregulierungseinrichtung mit der Mengeneinstellungeinrichtung verknüpft ist.

8. Schleuderdüngerstreuer nach einem oder mehreren der vorstehenden Ansprüche, dadurch gekennzeichne, daß die Lageveränderung der Dosierorgane (205) über eine elektronische Regelungseinrichtung erfolgt.

9. Schleuderdüngerstreuer nach einem oder mehreren der vorstehenden Ansprüche, **dadurch gekennzeichnet, daß** die Schleuderscheiben (206,207) im entgegengesetzten Drehsinn zueinander angetrieben werden, daß die Schleuderscheiben (206,207) wahlweise derart antreibbar sind, daß sie in der einen Antriebsart derart angetrieben sind, daß sie im mittleren hinteren Bereich auseinander drehen, während sie in der anderen Antriebsart im mittleren hinteren Bereich aufeinander zudrehen.

10. Schleuderdüngerstreuer nach einem oder mehreren der vorstehenden Ansprüche, **dadurch gekennzeichnet, daß** die jeder Arbeitsbreite entsprechende Position der Dosierorgane und/oder die Mengeneinstellung in eine Streutabelle eingetragen oder in einem elektronischen Regel- oder Einstellgerät eingespeichert sind.

## Claims

1. Centrifugal fertiliser broadcaster provided with hopper (201) and at least two rotatably driven centrifugal discs (206, 207), to which the material situated in the hopper (201) is suppliable in adjustable quantities via metering members (205), the association between metering members (205) and the centrifugal disc (206, 207) for the displacement of the delivery face of the material onto the centrifugal disc (206, 207) being variable at least between two positions by means of remote control devices, the base plate (231) of the hopper (201) being a component part of the metering members, and the displacement of the delivery face between the positions being effected by means of these remote control devices in such a manner that that the broadcasting width and/or working width is variable, **characterised in that** the metering members, i.e. also the base plate (231), for the displacement of the delivery face are rotatable about upwardly extending axes.

2. Centrifugal fertiliser broadcaster according to claim 1, **characterised in that** the metering members (205) are adjustable or dispiaceable relative to the centrifugal disc (206, 207) in a plane parallel to the disc plane.

3. Centrifugal fertiliser broadcaster according to claim 1, **characterised in that** the metering members (205) are configured as outlet apertures (232), which are adjustable in respect of their width of opening via slides (233), **in that** the outlet apertures are disposed in plates or cup-like members (231), and **in that** the metering members (205) are disposed so as to be adjustable, displaceable or rotatable relative to the hopper.

4. Centrifugal fertiliser broadcaster according to one or more of the preceding claims, **characterised in that** the metering members (205) are displaceable independently of one another.

5. Centrifugal fertiliser broadcaster according to one or more of the preceding claims, **characterised in that** the positional adjustment of the metering member (205) is linked to the quantity adjustment of the metering member (205).

6. Centrifugal fertiliser broadcaster according to one or more of the preceding claims, **characterised in that** the speed of the centrifugal discs (206, 207) is variable via a speed regulating device

7. Centrifugal fertiliser broadcaster according to one or more of the preceding claims, **characterised in that** the speed regulating device is linked to the quantity adjusting device.

8. Centrifugal fertiliser broadcaster according to one or more of the preceding claims, **characterised in that** the position of the metering members (205) is changed via an electronic regulating device.

9. Centrifugal fertiliser broadcaster according to one or more of the preceding claims, **characterised in that** the centrifugal discs (206, 207) are driven in opposite directions of rotation relative to each other, and **in that** the centrifugal discs (206, 207) are selectively drivable in such a manner that they are driven in one driving manner such that they rotate away from each other in the central rear region, white they rotate towards one another in the central rear region in the other driving manner.

10. Centrifugal fertiliser broadcaster according to one or more of the preceding claims, **characterised in that** the position of the metering members corresponding to each working width and/or the quantity adjustment is entered in a distribution table or stored in an electronic regulator or adjuster.

## Revendications

1. Epandeur centrifuge d'engrais comprenant un réservoir (201) et au moins deux disques d'épandage (206, 207) entraînés en rotation, et recevant par des organes de dosage (205), les produits contenus dans le réservoir (201) suivant des quantités réglables, l'association des organes de dosage (205) aux disques d'épandage (206, 207) pour déplacer la surface d'émission des produits sur les disques d'épandage (206, 207) étant réglable au moins entre deux positions par des installations de télécommande, la plaque de fond (231) du réservoir (201) faisant partie des organes de dosage et le déplacement de la surface d'émission se faisant entre les positions à l'aide de ces dispositifs de télécommande pour que la largeur d'épandage et/ou la largeur active puissent être modifiées,
**caractérisé en ce que**
les organes de dosage, c'est-à-dire également la plaque de fond (231), sont rotatifs pour déplacer la surface d'émission, autour d'axes dirigés vers le haut, qui correspondent au moins approximativement aux axes de rotation de chacun des disques d'épandage.

2. Epandeur centrifuge d'engrais selon la revendication 1,
**caractérisé en ce que**
les organes de dosage (205) sont réglables ou coulissants par rapport aux disques d'épandage (206, 207) dans un plan parallèle au plan d'épandage.

3. Epandeur centrifuge d'engrais selon la revendication 1,
**caractérisé en ce que**
les organes de dosage (205) ont des orifices de sortie (232) de largeur d'ouverture réglable par des tiroirs (233), les ouvertures de sortie étant prévues dans des éléments en forme de plaques ou de pots (231) et les organes de dosage (205) étant réglables, coulissants ou rotatifs par rapport au réservoir.

4. Epandeur centrifuge d'engrais selon l'une ou plusieurs des revendications précédentes,
**caractérisé en ce que**
les organes de dosage (205) sont réglables indépendamment les uns des autres.

5. Epandeur centrifuge d'engrais selon l'une ou plusieurs des revendications précédentes,
**caractérisé en ce que**
le réglage en position de l'organe de dosage (205) est combiné au réglage en quantité de l'organe de dosage (205).

6. Epandeur centrifuge d'engrais selon l'une ou plusieurs des revendications précédentes,
**caractérisé en ce que**
la vitesse de rotation des disques d'épandage (206, 207) peut être modifiée par une installation de régulation de vitesse de rotation.

7. Epandeur centrifuge d'engrais selon l'une ou plusieurs des revendications précédentes,
**caractérisé en ce que**
l'installation de régulation de vitesse de rotation se combine à l'installation de réglage de quantité.

8. Epandeur centrifuge d'engrais selon l'une ou plusieurs des revendications précédentes,
**caractérisé en ce que**
la variation de position des organes de dosage (205) se fait par l'intermédiaire d'une installation de régulation électronique.

9. Epandeur centrifuge d'engrais selon l'une ou plusieurs des revendications précédentes,
**caractérisé en ce que**
les disques d'épandage (206, 207) sont entraînés l'un par rapport à l'autre suivant des sens de rotation opposés, les disques d'épandage (206, 207) étant entraînés sélectivement pour tourner de façon à s'écarter au niveau de leur zone arrière médiane pour l'un des modes d'entraînement et que pour l'autre mode d'entraînement, ils tournent l'un vers l'autre dans leur zone arrière médiane.

10. Epandeur centrifuge d'engrais selon l'une ou plusieurs des revendications précédentes,
**caractérisé en ce que**
la position des organes de dosage qui correspond à chaque largeur active, et/ou le réglage quantitatif sont enregistrés dans un tableau d'épandage, ou sont mis en mémoire dans un appareil électronique de régulation ou de réglage.
